# FASCICULE DE BREVET EUROPEEN

(11) **EP 3 318 073 B1**
(45) Date de publication et mention de la délivrance du brevet: **07.05.2025**
(21) Numéro de dépôt: 16747822.1
(22) Date de dépôt: 29.06.2016
(51) Int. Cl.: H04W 4/70, H04W 4/02

(54) **PROCÉDÉ ET DISPOSITIF DE GÉNÉRATION DE SIGNAL DANS UN RÉSEAU D'OBJETS CONNECTÉS**
VERFAHREN UND VORRICHTUNG ZUR ERZEUGUNG EINES SIGNALS IN EINEM NETZWERK AUS VERBUNDENEN OBJEKTEN
METHOD AND DEVICE FOR GENERATING A SIGNAL IN A NETWORK OF CONNECTED OBJECTS

(30) Priorité: 30.06.2015 FR 1556166
(43) Date de publication de la demande: 09.05.2018
(73) Titulaire: Orange, 92130 Issy-les-Moulineaux (FR)
(72) Inventeur: KOUNTOURIS, Apostolos, 38000 Grenoble (FR); SURBAYROLE, Philippe, 38240 Meylan (FR); LAMPIN, Quentin, 38600 Fontaine (FR)
(74) Mandataire: Cabinet Beau de Loménie
(86) Numéro de dépôt international: PCT/FR2016/051613
(87) Numéro de publication internationale: WO 2017/001775

(56) Documents cités:
- EP-A1- 2 068 523
- EP-A1- 2 728 909
- US-A1- 2009 173 839
- US-A1- 2014 287 792

## Description

### Arrière-plan de l'invention

L'invention se rapporte au domaine général des communications par voie radio.

Elle concerne plus particulièrement les communications par exemple par voie radio d'objets ou d'équipements connectés à un réseau de communications (aussi appelés « objets connectés ») et déployés dans une zone géographique plus ou moins étendue.

L'invention s'applique plus particulièrement dans le cadre de réseaux d'objets connectés de type IoT (pour « Internet of Things », en anglais) ou M2M (pour « machine to machine », en anglais) qui assurent en continu la collecte de données, et à l'infrastructure dédiée sous-jacente d'un fournisseur de services apte à fournir les données ainsi collectées à un ou plusieurs clients. Cette infrastructure est composée notamment de stations réceptrices dites de numérisation ou équipements récepteurs qui permettent la collecte des données et leur transmission sous forme de paquets d'échantillons numériques à un système d'information d'un client du fournisseur de services. Les échantillons numériques sont indexés au niveau du système d'information dans une base de données selon différents critères comme par exemple des critères de temps, lieu, et fréquence. La demande EP 2728909 décrit une telle infrastructure.

On comprend bien dès lors que la localisation à la fois dans le temps et dans l'espace est centrale pour les réseaux d'objets connectés qui utilisent une indexation selon ce type de critères. Une telle localisation s'appuie notamment sur une datation des échantillons numériques. Au sens de l'invention, on entend par « datation de données », l'association à ces données d'une information temporelle précise d'horodatage, par exemple sous la forme date (Année, Mois, Jour) et heure (Heures : Minutes : Secondes).

Dans l'état actuel de la technique, la datation des données est réalisée au niveau des stations réceptrices de numérisation lors de la formation des paquets d'échantillons numériques. Chaque station réceptrice doit être équipée à cet effet d'un dispositif de synchronisation apte à récupérer localement une référence temporelle (par ex. une horloge commune diffusée par signal GPS (pour « Global Positionning System », en anglais), ou une horloge radio-pilotée), à synchroniser cette référence temporelle par rapport à l'horloge d'échantillonnage numérique de la station réceptrice de numérisation, à extraire et à associer aux échantillons une information de datation établie à partir de la référence temporelle commune synchronisée, et à intégrer cette information dans l'entête des paquets d'échantillons à transmettre au système d'information.

Ces opérations, en fonction de la précision de la datation souhaitée, imposent des contraintes matérielles et/ou logicielles importantes aux stations réceptrices et peuvent entrainer des coûts d'implémentation non négligeables.

En outre, cette complexité et ces coûts doivent être supportés par les stations réceptrices même si l'information de datation n'est en définitive pas utilisée par le système d'information du client du fournisseur de services.

Le document US 2009/0173839 A1 décrit un système d'horodatage de données de température acquises par des capteurs embarqués dans un train et de transmission de ces données horodatées à un serveur distant.

### Objet et résumé de l'invention

L'invention est définie dans les revendications indépendantes 1, 6, 8, 9, 11 et 12.

L'invention vise notamment à remédier à ces inconvénients en proposant, selon un premier aspect, un procédé de génération d'un signal selon la revendication 1 destiné à être transmis dans un réseau d'objets connectés, ce procédé comportant :
- une étape d'obtention d'un premier signal véhiculant un flux de données acquises par un objet connecté du réseau ;
- une étape de réception d'un deuxième signal de synchronisation comprenant une information fournissant une datation du premier signal ; et
- une étape de génération d'un troisième signal en combinant selon une opération réversible le premier signal et le deuxième signal de synchronisation,
ladite opération réversible comprenant :
- un multiplexage fréquentiel des premier et deuxième signaux sur deux bandes de fréquences consécutives ; ou
- un multiplexage des premier et deuxième signaux par codes orthogonaux ; ou
- un multiplexage stéganographique des premier et deuxième signaux ; ou
- un tatouage, le troisième signal étant obtenu en superposant les premier et deuxième signaux, le deuxième signal étant un signal à forte densité spectrale, le premier signal étant un signal à bande étroite de faible densité.

Corrélativement, l'invention vise un dispositif de génération d'un signal selon la revendication 8.

Pour chacune de ces opérations réversibles, il existe une opération dite « inverse » que l'on peut appliquer au troisième signal et qui permet d'extraire à partir de ce troisième signal, les informations véhiculées par le premier signal et par le deuxième signal de synchronisation. Il convient de noter qu'il n'est pas nécessaire d'obtenir via cette opération inverse une reconstruction des premier et deuxième signaux parfaitement identique aux premier et deuxième signaux utilisés pour générer le troisième signal. Une reconstruction permettant d'extraire avec une qualité suffisante (ex. rapport signal-sur-bruit suffisant) les informations (données ou information de datation) véhiculées par le premier et le deuxième signal est suffisante pour être considérée comme réversible au sens de l'invention. Autrement dit, la notion d'opération réversible inclut au sens de l'invention des opérations orthogonales permettant de restaurer à l'identique les premier et deuxième signaux mais également des opérations non orthogonales, « quasi-réversibles », qui ne conduisent pas à l'exacte restauration (i.e. reconstruction) des premier et deuxième signaux dès lors que ces opérations permettent d'extraire les informations véhiculées par ces signaux.

Il convient de noter par ailleurs qu'un tel dispositif de génération selon l'invention peut être indifféremment embarqué dans diverses entités du réseau d'objets connectés, comme par exemple dans une station réceptrice de numérisation ou dans un objet connecté à l'origine des données (ex. capteur). Le dispositif de traitement selon l'invention peut être quant à lui embarqué dans un système d'information d'un client de l'opérateur du réseau d'objets connectés exploitant les données collectées par ce réseau.

L'invention permet donc d'associer facilement à des données obtenues par un objet connecté, une information de datation précise de ces données, via le troisième signal, cette information pouvant être aisément extraite du troisième signal, à la demande. En d'autres mots, le premier signal véhiculant les données acquises par l'objet connecté est « marqué » conformément à l'invention par une information de datation. Cette information est contenue intrinsèquement dans le deuxième signal de synchronisation et est combinée de façon brute aux données acquises par l'objet connecté, c'est-à-dire telle quelle sans traitement préalable. La liberté est ainsi laissée aux dispositifs recevant le troisième signal conformément à l'invention d'extraire si besoin et d'exploiter cette information de datation.

L'invention permet donc avantageusement de transférer la tâche de la datation à proprement parler des données du premier signal acquises par l'objet connecté, de l'équipement récepteur/station réceptrice de numérisation vers l'entité qui a besoin de dater ce signal (par ex. le système d'information hébergeant la base de données dans laquelle sont stockées ces données).

Autrement dit, il ne s'agit plus de dater les données acquises, systématiquement et localement sur la station réceptrice de numérisation comme dans l'état de la technique, mais de réaliser cette datation à la demande, de façon centralisée, par exemple au niveau du système d'information du client qui est généralement sujet à des contraintes d'implémentation et de complexité moins importantes que les stations réceptrices.

En outre, l'invention permet d'améliorer la précision de la datation des données. Le deuxième signal est par exemple reçu d'un système de navigation par satellites (ex. système GPS (Global Positioning System), GLONASS, Galileo, etc.). Un tel système fournit de façon connue une information de datation précise et fiable. La datation selon l'invention utilise directement l'information comprise dans le deuxième signal sans requérir de transformation de cette information ni les opérations de l'état de la technique consistant à déterminer une information de datation après synchronisation entre la station réceptrice de numérisation et une référence commune, et qui peuvent entrainer des imprécisions sur l'information de datation obtenue. Ainsi, la solution de l'invention améliore la précision de la datation du premier signal tout en simplifiant la conception de la station réceptrice de numérisation.

Grâce à la combinaison des deux signaux de manière réversible, l'information de datation des données peut être facilement extraite à moindre coût.

Une opération réversible envisagée est un multiplexage stéganographique des premier et deuxième signaux.

Un tel multiplexage consiste de manière connue à considérer les données véhiculées par le premier signal et à les modifier de façon aussi discrète que possible afin d'y dissimuler l'information transportée par le deuxième signal. Dans le contexte de l'invention, une manière de réaliser un tel multiplexage peut consister ainsi par exemple à utiliser quelques bits de poids faible des échantillons du premier signal pour véhiculer des bits du deuxième signal de synchronisation.

Comme mentionné précédemment, le procédé de génération peut être mis en œuvre au niveau de l'objet connecté ou d'une station réceptrice de numérisation du réseau d'objets connectés.

Ainsi, lorsque ce procédé est mis en œuvre au niveau de l'objet connecté, le troisième signal est un signal analogique. Dans ce mode de réalisation, le procédé comporte alors une étape de transmission par l'objet connecté du troisième signal vers une station réceptrice de numérisation du réseau d'objets connectés, par exemple par voie radio.

Lorsque ce procédé est mis en œuvre au niveau d'une station réceptrice de numérisation du réseau d'objets connectés, le procédé selon l'invention comporte en outre une étape de numérisation du troisième signal, une étape de découpage du troisième signal numérisé en paquets et une étape de transmission des paquets à un système d'information via un réseau de communications.

En variante, lorsque ce procédé est mis en œuvre au niveau d'une station réceptrice de numérisation du réseau d'objets connectés, le procédé selon l'invention comporte en outre une étape de numérisation du premier signal et du deuxième signal de synchronisation avant l'étape de génération, une étape de découpage du troisième signal numérisé en paquets et une étape de transmission des paquets à un système d'information via un réseau de communications.

L'invention offre donc une grande flexibilité d'implémentation.

Selon un deuxième aspect, l'invention vise un procédé de traitement d'un signal transmis dans un réseau d'objets connectés et généré selon un procédé de génération de l'invention, ce procédé de traitement étant conforme à la revendication 6.

Dans un mode particulier de réalisation, ce procédé de traitement comporte une étape d'obtention d'une datation des données véhiculées par le premier signal et/ou d'une localisation de l'objet connecté ayant acquis ces données, en utilisant l'information comprise dans le deuxième signal de synchronisation.

Corrélativement, l'invention vise un dispositif de traitement d'un signal transmis dans un réseau d'objets connectés, ce dispositif étant conforme à la revendication 9.

Selon un troisième aspect, l'invention vise un système de communication comportant :
- au moins un objet connecté et au moins une station réceptrice de numérisation d'un réseau d'objets connectés ; et
- un système d'information comprenant un dispositif de traitement selon l'invention ;
dans lequel au moins un équipement du réseau d'objets connectés parmi ledit au moins un objet connecté et ladite au moins une station réceptrice de numérisation comprend un dispositif de génération selon l'invention.

Les avantages et caractéristiques particuliers du dispositif de génération de signal, du dispositif de traitement de signal, et du système de communication selon l'invention sont identiques à ceux des procédés décrits ci-dessus et ne seront pas rappelés ici.

On peut en outre également envisager, dans d'autres modes de réalisation, que le procédé de génération de signal, le procédé de traitement de signal, le dispositif de génération de signal, le dispositif de traitement de signal et le système de communication selon l'invention présentent en combinaison tout ou partie des caractéristiques précitées.

Dans un mode particulier de réalisation, les différentes étapes du procédé de génération de signal et/ou du procédé de traitement de signal sont déterminées par des instructions de programmes d'ordinateur.

En conséquence, l'invention vise aussi un programme d'ordinateur sur un support d'information, ce programme étant susceptible d'être mis en œuvre dans un ordinateur, pour la mise en œuvre des étapes des procédés selon l'invention, tels que brièvement décrits ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information lisible par un ordinateur, et comportant des instructions du programme d'ordinateur tel que mentionné ci-dessus.

Le support d'information peut être n'importe quel entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (« floppy disc » en anglais), un disque dur, ou une clé USB.

D'autre part, le support d'information peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, le support d'information peut être constitué de circuits intégrés dans lesquels le programme est incorporé, les circuits étant adaptés pour exécuter ou pour être utilisés dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un système de communication conforme à l'invention dans un mode particulier de réalisation de l'invention ;
- la figure 2 représente l'architecture matérielle d'un dispositif de génération conforme à l'invention dans un mode particulier de réalisation;
- la figure 3 représente l'architecture matérielle d'un dispositif de traitement conforme à l'invention dans un mode particulier de réalisation;
- la figure 4 représente, sous forme d'organigramme, les principales étapes du procédé mis en œuvre par le dispositif de génération de la figure 2 dans un mode particulier de réalisation de l'invention ;
- la figure 5 représente, sous forme d'organigramme, les principales étapes du procédé mis en œuvre par le dispositif de traitement de la figure 3 dans un mode particulier de réalisation de l'invention.

### Description détaillée de l'invention

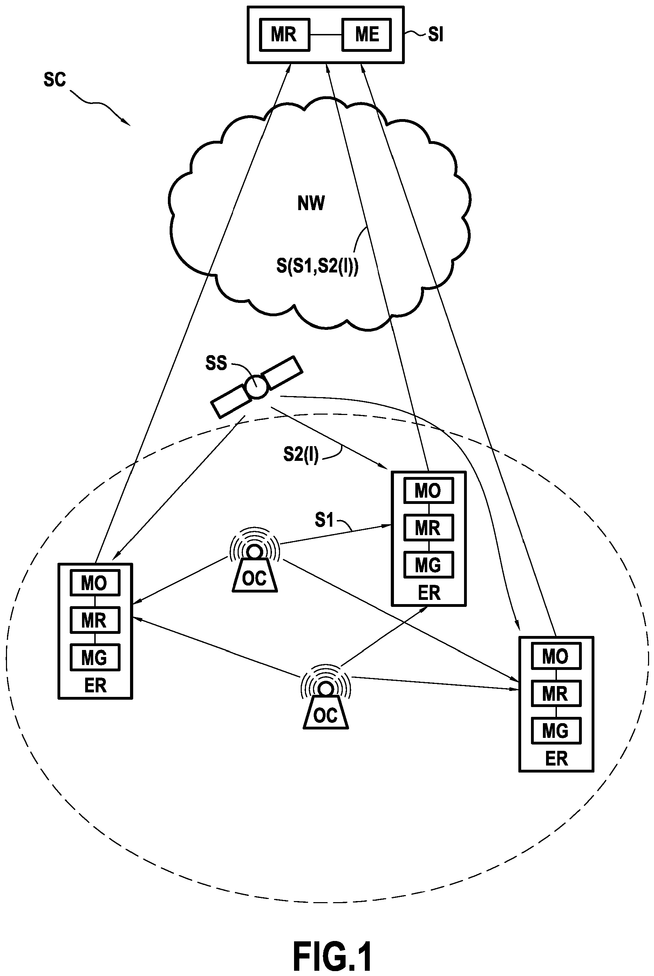

La **figure 1** représente, dans son environnement, un système de communication SC conforme à l'invention, dans un mode particulier de réalisation de l'invention. Ce système SC comprend ici une pluralité de stations réceptrices ER et une pluralité d'objets connectés OC (par ex. des capteurs de consommation d'eau) formant un réseau d'objets connectés d'un fournisseur de services, ainsi qu'un système d'information SI d'une entité cliente de ce fournisseur de services.

Dans le mode de réalisation décrit ici, chaque station réceptrice ER est munie d'un dispositif de génération DG conforme à l'invention, et le système d'information SI est muni d'un dispositif de traitement DD conforme à l'invention. En variante, tout ou partie des stations réceptrice ER sont munies d'un dispositif de génération DG, et/ou tout ou partie des objets connectés OC sont également munis d'un dispositif de génération DG.

Dans l'exemple envisagé à la figure 1, le système SC permet d'associer à un signal applicatif S1 véhiculant des données acquises par un objet connecté OC des informations de datation précises fournies par un signal de synchronisation radio S2 émis en continu par un dispositif de synchronisation SS externe « universel ». Ce dispositif de synchronisation SS est par exemple ici un système de navigation par satellite tel qu'un système GPS, GLONASS (pour « Global Navigation Satellite System », en anglais), Galileo, DORIS (pour « Doppler Orbitography and Radiopositioning Integrated by Satellite », en anglais), Beidou... ou un dispositif d'horloge radio-pilotée. On désigne par S le signal résultant de la combinaison des signaux S1 et S2 réalisée par le dispositif de génération DG.

Conformément à l'invention, la génération du signal S par le dispositif de génération DG intégré dans la station réceptrice ER s'appuie sur une opération réversible appliquée au signal applicatif S1 et au signal de synchronisation S2.

Cette opération réversible comprend :
- un multiplexage fréquentiel des premier et deuxième signaux S1, S2 sur deux bandes de fréquences consécutives ; ou
- un multiplexage des premier et deuxième signaux S1, S2 par codes orthogonaux ; ou
- un multiplexage stéganographique des premier et deuxième signaux S1, S2, ou
- un tatouage, le troisième signal étant obtenu en superposant les premier et deuxième signaux, le deuxième signal étant un signal à forte densité spectrale, le premier signal étant un signal à bande étroite de faible densité.

Comme mentionné précédemment, pour chacune de ces opérations réversiblesil existe une opération dite « inverse » que l'on peut appliquer au troisième signal et qui permet de reconstruire les premier et deuxième signaux S1 et S2, ou tout du moins d'extraire à partir du signal S, les informations véhiculées par le premier signal S1 et par le deuxième signal de synchronisation S2.. Des exemples de telles opérations sont décrits ultérieurement.

Dans le mode de réalisation décrit ici, l'objet connecté OC, la station réceptrice ER et le dispositif de synchronisation SS communiquent entre eux par voie radio. Aucune limitation n'est toutefois attachée à la nature du lien de communication entre l'objet connecté OC et la station réceptrice ER. Il peut s'agir indifféremment d'un lien de communication radio, filaire, optique, etc.

La station réceptrice ER et le système d'information SI communiquent entre eux via le réseau de communications NW. Aucune limitation n'est attachée à la nature du réseau de communications NW. Il peut s'agir indifféremment d'un réseau de télécommunications fixe, mobile, sans fil, filaire, etc.

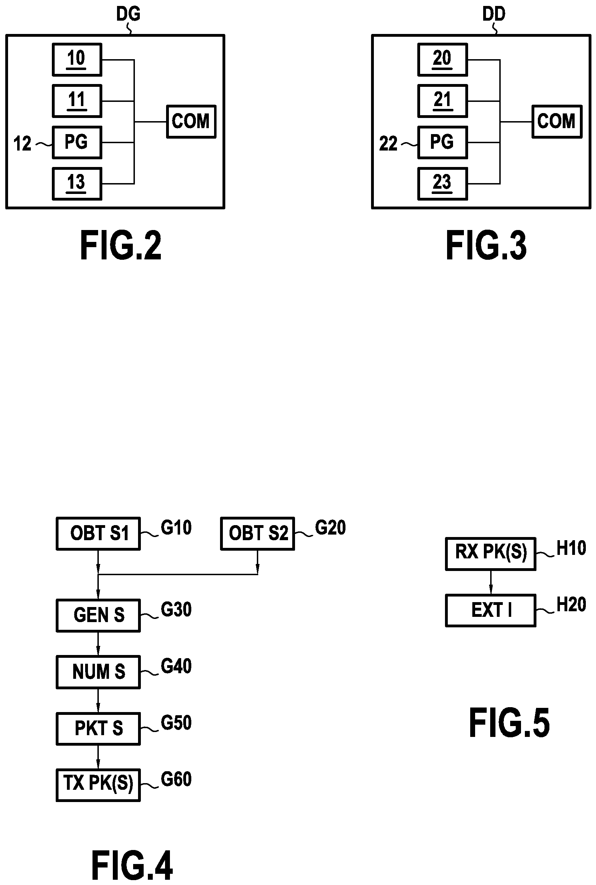

Dans le mode de réalisation décrit ici, le dispositif de génération DG et le dispositif de traitement DD ont l'architecture matérielle d'un ordinateur, telle que représentée schématiquement à la **figure 2** et à la **figure 3** respectivement.

En relation avec la **figure 2****,** le dispositif de génération DG comporte notamment un processeur 10, une mémoire non volatile réinscriptible 11, une mémoire morte de type ROM (pour « Read-only memory », en anglais) 12, une mémoire vive de type RAM (pour « Random-access memory », en anglais) 13 et un module COM de communication.

Le module COM de communication est équipé de différentes interfaces qui lui permettent de communiquer par voie radio avec le dispositif de synchronisation SS pour recevoir le signal de synchronisation S2 et avec l'objet connecté OC pour recevoir le signal applicatif S1, et via le réseau de communications NW avec le système d'information SI pour lui transmettre le signal S généré conformément à l'invention. Ces interfaces peuvent inclure notamment des modules Radio fréquences RF, une carte réseau etc. adaptés aux différents réseaux de communications considérés.

La mémoire morte 12 du dispositif de génération DG constitue un support d'enregistrement conforme à l'invention, lisible par le processeur 10 et sur lequel est enregistré un programme d'ordinateur PG conforme à l'invention comportant des instructions pour l'exécution des étapes d'un procédé de génération selon l'invention tel qu'il est mis en œuvre par le dispositif de génération DG et dont les étapes sont détaillées ultérieurement en référence à la figure 4.

Ce programme d'ordinateur PG définit de façon équivalente des modules fonctionnels du dispositif de génération DG (modules logiciels ici), et notamment ici un module MO d'obtention du signal applicatif S1 et un module MR de réception du signal de synchronisation S2 qui s'appuient ici sur le module COM de communication, ainsi qu'un module MG de génération.

Les fonctions de ces modules logiciels sont détaillées davantage ultérieurement en référence aux étapes du procédé de génération selon l'invention.

En relation avec la **figure 3** et de façon similaire, le dispositif de traitement DD comporte notamment un processeur 20, une mémoire non volatile réinscriptible 21, une mémoire morte de type ROM 22, une mémoire vive de type RAM 23.

Le dispositif de datation DD comporte également un module COM de communication adapté à recevoir en provenance de la station réceptrice ER le signal S généré conformément à l'invention.

La mémoire morte 22 du dispositif de génération DD constitue un support d'enregistrement conforme à l'invention, lisible par le processeur 20 et sur lequel est enregistré un programme d'ordinateur conforme à l'invention comportant des instructions pour l'exécution des étapes d'un procédé de traitement selon l'invention tel qu'il est mis en œuvre par le dispositif de traitement DD et dont les étapes sont détaillées ultérieurement en référence à la figure 5.

Ce programme d'ordinateur définit de façon équivalente un module fonctionnel du dispositif de traitement DD (modules logiciels ici), et notamment ici un module MR de réception du signal généré par le dispositif de génération DG qui s'appuie ici sur le module COM de communication, ainsi qu'un module ME d'extraction.

Les fonctions des modules MS et MD sont détaillées davantage ultérieurement en référence aux étapes du procédé de traitement selon l'invention.

En référence à la **figure 4****,** nous allons maintenant décrire les principales étapes du procédé mis en œuvre par une station réceptrice ER de la figure 2 et plus précisément par le dispositif de génération DG de cette station conformément à l'invention, dans un mode particulier de réalisation.

On suppose qu'un objet connecté OC acquiert en continu des données et les transmet par voie radio sous la forme d'un signal applicatif S1 à la station réceptrice ER. Ces données peuvent être acquises par l'objet connecté OC à partir d'un capteur ou d'un dispositif de mesure équipant l'objet connecté par exemple, ou bien être générées par l'objet connecté lui-même.

Ce signal applicatif S1 occupe ici une bande de fréquence BD1 (par exemple [863 MHz, 870 MHz]). Le signal S1 reçu par la station réceptrice ER via ses modules RF est transmis via son module COM de communication à son module MO d'obtention (G10).

Ce signal applicatif S1 véhicule le flux de données acquises par l'objet OC.

Simultanément, la station réceptrice ER reçoit (G20) également en continu via son module RF un signal de synchronisation S2 occupant une bande de fréquence BD2 (par exemple [1575.42-Δ MHz, 1575.42+Δ MHz]) et provenant du système de navigation par satellite SS. Le signal de synchronisation S2 est par exemple ici un signal GPS. De façon connue, ce signal de synchronisation S2 comprend une information brute I (par exemple une horloge atomique) fournissant une datation du signal applicatif S1 reçu au même moment, c'est-à-dire une information I indiquant l'instant (date et heure) précis de l'obtention du signal applicatif S1.

La station réceptrice ER génère alors (G30) via son module MG de génération, un signal S en combinant selon une opération réversible le signal applicatif S1 et le signal de synchronisation S2.

Dans le mode de réalisation décrit ici, cette opération réversible consiste en un multiplexage fréquentiel des signaux S1 et S2 dans deux bandes de fréquences consécutives. A cet effet, le module MG de génération transpose par exemple le signal S2 occupant la bande BD2 sur une bande de fréquence BD2' (ex. [870 MHz, 870+2Δ MHz]) consécutive à la bande de fréquence BD1 (ex. [863 MHz, 870 MHz]). Le signal S est alors obtenu en concaténant le signal applicatif S1 occupant la bande de fréquence BD1 et le signal S2 transposé dans la bande BD2'. Il occupe une bande de fréquence BD = [B1, B2], c'est-à-dire dans l'exemple [863 MHz, 870+2Δ MHz].

Selon ce mode de réalisation, les signaux S1 et S2 sont des signaux analogiques et sont combinés dans le domaine analogique. L'opération de multiplexage fréquentiel implémentée est orthogonale et réversible, c'est-à-dire le signal applicatif S1 et le signal de synchronisation S2 peuvent être séparés aisément en utilisant un filtre passe-bande connu en soi.

Dans le mode de réalisation décrit ici, la station réceptrice ER procède (G40) ensuite à une numérisation du signal S en échantillons numériques, grâce à un convertisseur analogique numérique. Il découpe (G50) ensuite en paquets les échantillons obtenus par exemple conformément au protocole IP. Elle envoie (G60) ensuite les paquets ainsi découpés au système d'information SI via le réseau de communications NW.

En variante, les signaux S1 et S2 reçus sont numérisés (G40) par la station réceptrice ER avant la génération du signal S. Cette numérisation, réalisée de façon connue en soi au moyen d'un convertisseur analogique numérique. Il convient de noter que les deux signaux peuvent être échantillonnés à la même fréquence d'échantillonnage ou avec des fréquences d'échantillonnage différentes. Dans ce cas, la station réceptrice ER procède à un ajustement des rythmes des deux signaux numérisés (par exemple au moyen d'une interpolation) avant leur combinaison de sorte à rendre leurs rythmes identiques. Le signal S généré alors obtenu est sous forme d'échantillons numériques.

D'autres opérations réversibles qu'un multiplexage fréquentiel peut bien entendu être considéré pour combiner les signaux S1 et S2. Ces opérations peuvent être orthogonales ou non.

Ainsi par exemple, l'opération réversible peut consister en un multiplexage par codes orthogonaux. Selon cette opération, les signaux S1 et S2 peuvent être ramenés en bande de base puis étalés respectivement à l'aide de codes C1 et C2 (ex. séquences de Walsh) orthogonaux entre eux avant d'être sommés.

Selon une autre variante, l'opération réversible peut consister en un multiplexage stéganographique. Les bits de poids faible des échantillons du signal applicatif S1 peuvent être notamment utilisés pour véhiculer les bits du signal de synchronisation S2. Par exemple, 8 bits du signal de synchronisation S2 utilisent les deux derniers bits du signal applicatif S1 sur 4 échantillons successifs du signal applicatif S1.

Selon une autre variante encore, l'opération réversible consiste en une opération dite de tatouage ou watermarking » en anglais. Selon cette variante, le signal S2 est un signal à forte densité spectrale (ex. signal étalé en spectre) tandis que le signal S1 est un signal à bande étroite de faible densité. Le signal S est obtenu en superposant les signaux S1 et S2. Les deux signaux S1 et S2 peuvent alors être séparés en en réception grâce à un simple filtrage.

Il convient de noter qu'il n'est pas nécessaire pour qu'une opération de combinaison soit considérée comme « réversible » au sens de l'invention d'obtenir une reconstruction des premier et deuxième signaux parfaitement à l'identique par rapport aux signaux S1 et S2 utilisés pour générer le signal S. Une reconstruction permettant d'extraire avec une qualité (ou rapport signal-sur-bruit) suffisante les informations (données et/ou information de datation) véhiculées par les signaux S1 et S2 est suffisante pour être considérée comme réversible au sens de l'invention. C'est le cas par exemple pour une opération de type watermarking telle que décrite précédemment. Autrement dit, la notion d'opération réversible inclut au sens de l'invention des opérations orthogonales permettant de restaurer à l'identique les premier et deuxième signaux mais également des opérations non orthogonales, « quasi-réversibles », qui ne conduisent pas à l'exacte restauration (i.e. reconstruction) des premier et deuxième signaux dès lors que ces opérations permettent d'extraire les informations véhiculées par ces signaux. Autrement dit, il existe une opération inverse permettant de restaurer (i.e. d'extraire) le signal applicatif S1 et le signal de synchronisation S2 à partir du signal S.

On comprend bien que selon l'opération réversible considérée, les signaux (S1, S2, S) sont numérisés avant ou après combinaison.

Dans un autre mode de réalisation de l'invention, le dispositif de génération DG est embarqué dans l'objet connecté OC qui acquiert les données véhiculées par le signal applicatif S1. Dans ce cas, l'objet connecté OC génère dans le domaine analogique le signal combiné S à partir des signaux analogiques S1 et S2 et transmet directement par voie radio le signal S analogique ainsi généré à la station réceptrice ER. La station réceptrice ER numérise et découpe en paquets le signal S échantillonné, puis transmet les paquets au système d'information SI via le réseau de communications NW.

En référence à la **figure 5****,** nous allons maintenant décrire les principales étapes du procédé mis en œuvre par le server d'information SI (et plus particulièrement par son dispositif de traitement DD) sur réception des paquets d'échantillons numériques envoyés par la station réceptrice ER dans un mode particulier de réalisation de l'invention.

Le système d'information SI reçoit (H10) via son module MR de réception les paquets d'échantillons numériques provenant de la station réceptrice ER via le réseau de communication NW. Le système d'information SI assemble les paquets pour obtenir une série d'échantillons numériques du signal S généré selon une opération réversible par le procédé de génération conforme à l'invention.

Le système d'information SI extrait (H20) ensuite ici via son module MS d'extraction, deux séries d'échantillons numériques E1 et E2 correspondantes respectivement aux versions numérisées du signal applicatif S1 et du signal de synchronisation S2. Cette extraction est réalisée ici, dans le cas d'une opération réversible basée sur un multiplexage fréquentiel orthogonal, grâce à un filtrage numérique connu en soi.

Dans le mode de réalisation décrit ici, le système d'information SI utilise l'information brute I de datation portée par le signal de synchronisation S2 pour dater de manière précise les échantillons numériques véhiculés par le signal S1 et stocker ces échantillons selon un critère temporel dans une base de données.

En variante, le système d'information SI peut stocker les échantillons sans traiter l'information contenue dans le signal de synchronisation S2.

En variante, le système d'information SI peut obtenir à partir de l'information de datation I du signal de synchronisation S2 la localisation de l'objet connecté OC de façon connue en soi, par exemple par un calcul du temps de vol en utilisant l'information I.

Dans le mode de réalisation décrit ici, le dispositif de traitement DD est implémenté dans le système d'information SI. En variante, Dans un autre mode de réalisation, le dispositif de traitement DD est implémenté dans un autre équipement de l'entité cliente.

## Revendications

1. Procédé de génération d'un signal (S) destiné à être transmis dans un réseau d'objets connectés, ledit procédé comportant :
- une étape (G10) d'obtention d'un premier signal (S1) véhiculant un flux de données acquises par un objet connecté (OC) du réseau, ledit procédé étant tel qu'il comporte :
- une étape (G20) de réception d'un deuxième signal (S2) de synchronisation comprenant une information (I) fournissant une datation du premier signal (S1); et
- une étape (G30) de génération d'un troisième signal (S) en combinant selon une opération réversible le premier signal (S1) et le deuxième signal (S2) de synchronisation, ledit procédé étant **caractérisé en ce que** ladite opération réversible comprend :
- un multiplexage fréquentiel des premier et deuxième signaux (S1, S2) sur deux bandes de fréquences consécutives ; ou
- un multiplexage des premier et deuxième signaux (S1, S2) par codes orthogonaux ; ou
- un multiplexage stéganographique des premier et deuxième signaux (S1, S2); ou
- un tatouage, le troisième signal étant obtenu en superposant les premier et deuxième signaux, le deuxième signal étant un signal à forte densité spectrale, le premier signal étant un signal à bande étroite de faible densité.

2. Procédé selon la revendication 1 dans lequel ledit deuxième signal (S2) de synchronisation est reçu d'un système (SS) de navigation par satellites.

3. Procédé selon la revendication 1 ou 2 dans lequel les étapes d'obtention (G10), de réception (G20) et de génération (G30) sont mises en œuvre par ledit objet connecté (OC) et ledit troisième signal (S) est un signal analogique, ledit procédé comportant en outre une étape de transmission par l'objet connecté (OC) du troisième signal (S) vers une station réceptrice (ER) de numérisation du réseau d'objets connectés.

4. Procédé selon la revendication 1 ou 2 dans lequel les étapes d'obtention (G10), de réception (G20) et de génération (G30) sont mises en œuvre par une station réceptrice (ER) de numérisation du réseau d'objets connectés, ledit procédé comportant en outre:
- une étape (G40) de numérisation du troisième signal (S);
- une étape (G50) de découpage en paquets du troisième signal numérisé ; et
- une étape (G60) de transmission des paquets à un système d'information (SI) via un réseau de communications (NW).

5. Procédé selon la revendication 1 ou 2 dans lequel les étapes d'obtention (G10), de réception (G20) et de génération (G30) sont mises en œuvre par une station réceptrice (ER) de numérisation du réseau d'objets connectés, ledit procédé comportant en outre :
- une étape de numérisation du premier signal (S1) et du deuxième signal (S2) de synchronisation avant l'étape de génération du troisième signal ;
- une étape de découpage en paquets du troisième signal (S); et
- une étape (G60) de transmission des paquets à un système d'information (SI) via un réseau de communications (NW).

6. Procédé de traitement d'un signal (S) transmis dans un réseau d'objets connectés et généré selon un procédé de génération selon l'une quelconque des revendications 1 à 5, le procédé de traitement comportant :
- une étape de réception dudit signal (S) .
- une étape (H20) d'extraction à partir du signal reçu de données véhiculées par un premier signal (S1) et d'une information (I) de datation comprise dans un deuxième signal (S2) de synchronisation, le premier signal (S1) et le deuxième signal (S2) étant obtenus en utilisant une opération inverse à l'opération réversible utilisée lors du procédé de génération.

7. Procédé de traitement selon la revendication 6 comportant une étape d'obtention d'une datation des données véhiculées par le premier signal (S1) et/ou d'une localisation d'un objet connecté (OC) ayant acquis ces données, en utilisant l'information (I) de datation comprise dans le deuxième signal (S2) de synchronisation.

8. Dispositif (DG) de génération d'un signal (S) destiné à être transmis dans un réseau d'objets connectés, ledit dispositif (DG) comportant :
- un module (MO) d'obtention d'un premier signal (S1) véhiculant un flux de données acquises par un objet connecté (OC) du réseau, ledit dispositif étant tel qu'il comporte :
- un module (MR) de réception d'un deuxième signal (S2) de synchronisation comprenant une information (I) fournissant une datation du premier signal (S1);
- un module (MG) de génération de signal configuré pour générer un troisième signal (S) en combinant selon une opération réversible le premier signal (S1) et le deuxième signal (s2) de synchronisation, ledit dispositif étant **caractérisé en ce que** ladite opération réversible comprend :
- un multiplexage fréquentiel des premier et deuxième signaux (S1, S2) sur deux bandes de fréquences consécutives ; ou
- un multiplexage des premier et deuxième signaux (S1, S2) par codes orthogonaux ; ou
- un multiplexage stéganographique des premier et deuxième signaux (S1, S2); ou
- un tatouage, le troisième signal étant obtenu en superposant les premier et deuxième signaux, le deuxième signal étant un signal à forte densité spectrale, le premier signal étant un signal à bande étroite de faible densité.

9. Dispositif (DD) de traitement d'un signal (S) transmis dans un réseau d'objets connectés, ledit dispositif (DD) comprenant :
- un module (MR) de réception, via un réseau de communications (NW), d'un signal (S) généré par un procédé de génération (DG) de signal selon l'une quelconque des revendications 1 à 5 ;
- un module (ME) d'extraction configuré pour extraire à partir du signal (S) reçu de données véhiculées par un premier signal (S1) et une information (I) de datation comprise dans un deuxième signal (S2) de synchronisation, le premier signal (S1) et le deuxième signal (S2) étant obtenus en utilisant une opération inverse à l'opération réversible utilisée lors du procédé de génération, le dispositif étant **caractérisé en ce que** l'opération réversible utilisée lors du procédé de génération comprend:
- un multiplexage fréquentiel des premier et deuxième signaux (S1, S2) sur deux bandes de fréquences consécutives ; ou
- un multiplexage des premier et deuxième signaux (S1, S2) par codes orthogonaux ; ou
- un multiplexage stéganographique des premier et deuxième signaux (S1, S2); ou
- un tatouage, le troisième signal étant obtenu en superposant les premier et deuxième signaux, le deuxième signal étant un signal à forte densité spectrale, le premier signal étant un signal à bande étroite de faible densité.

10. Système (SC) de communication comportant :
- au moins un objet connecté (OC) et au moins une station réceptrice (ER) de numérisation d'un réseau d'objets connectés ; et
- un système (SI) d'information comprenant un dispositif (DD) de traitement selon la revendication 9 ;
au moins un équipement du réseau d'objets connectés parmi ledit au moins un objet connecté (OC) et ladite au moins une station réceptrice (ER) comprenant un dispositif (DG) de génération selon la revendication 8.

11. Programme d'ordinateur comportant des instructions pour l'exécution des étapes d'un procédé de génération de signal selon l'une quelconque des revendications 1 à 5 ou d'un procédé de traitement de signal selon la revendication 6 ou 7, lorsque ledit programme est exécuté par un processeur.

12. Support d'enregistrement lisible par un ordinateur sur lequel est enregistré un programme d'ordinateur selon la revendication 11.

## Patentansprüche

1. Verfahren zur Erzeugung eines Signals (S), das dazu bestimmt ist, in einem Netzwerk aus verbundenen Objekten übertragen zu werden, wobei das Verfahren umfasst:
- einen Schritt (G10) des Erhaltens eines ersten Signals (S1), das einen Strom von Daten transportiert, die von einem verbundenen Objekt (OC) des Netzwerks erfasst werden, wobei das Verfahren dergestalt ist, dass es umfasst:
- einen Schritt (G20) des Empfangens eines zweiten Signals (S2) zur Synchronisation, das eine Information (I) beinhaltet, die eine Datierung des ersten Signals (S1) angibt; und
- einen Schritt (G30) des Erzeugens eines dritten Signals (S), indem das erste Signal (S1) und das zweite Signal (S2) zur Synchronisation gemäß einem reversiblen Vorgang kombiniert werden, wobei das Verfahren **dadurch gekennzeichnet ist, dass** der reversible Vorgang beinhaltet:
- ein Frequenzmultiplexen der ersten und zweiten Signale (S1, S2) über zwei aufeinander folgende Frequenzbänder; oder
- ein Multiplexen der ersten und zweiten Signale (S1, S2) durch orthogonale Codes; oder
- ein steganographisches Multiplexen der ersten und zweiten Signale (S1, S2); oder
- ein Watermarking, wobei das dritte Signal erhalten wird, indem die ersten und zweiten Signale überlagert werden, wobei das zweite Signal ein Signal mit hoher spektraler Dichte ist, wobei das erste Signal ein schmalbandiges Signal mit geringer Dichte ist.

2. Verfahren nach Anspruch 1, wobei das zweite Signal (S2) zur Synchronisation von einem Satellitennavigationssystem (SS) empfangen wird.

3. Verfahren nach Anspruch 1 oder 2, wobei die Schritte des Erhaltens (G10), Empfangens (G20) und Erzeugens (G30) von dem verbundenen Objekt (OC) ausgeführt werden und das dritte Signal (S) ein analoges Signal ist, wobei das Verfahren ferner einen Schritt des Übertragens des dritten Signals (S) durch das verbundene Objekt (OC) an eine Empfangsstation (ER) zur Digitalisierung des Netzwerks aus verbundenen Objekten umfasst.

4. Verfahren nach Anspruch 1 oder 2, wobei die Schritte des Erhaltens (G10), Empfangens (G20) und Erzeugens (G30) von einer Empfangsstation (ER) zur Digitalisierung des Netzwerks aus verbundenen Objekten ausgeführt werden, wobei das Verfahren ferner umfasst:
- einen Schritt (G40) des Digitalisierens des dritten Signals (S);
- einen Schritt (G50) des Zerlegens des digitalisierten dritten Signals in Pakete; und
- einen Schritt (G60) des Übertragens der Pakete an ein Informationssystem (SI) über ein Kommunikationsnetzwerk (NW).

5. Verfahren nach Anspruch 1 oder 2, wobei die Schritte des Erhaltens (G10), Empfangens (G20) und Erzeugens (G30) von einer Empfangsstation (ER) zur Digitalisierung des Netzwerks aus verbundenen Objekten ausgeführt werden, wobei das Verfahren ferner umfasst:
- einen Schritt des Digitalisierens des ersten Signals (S1) und des zweiten Signals (S2) zur Synchronisation vor dem Schritt des Erzeugens des dritten Signals;
- einen Schritt des Zerlegens des dritten Signals (S) in Pakete; und
- einen Schritt (G60) des Übertragens der Pakete an ein Informationssystem (SI) über ein Kommunikationsnetzwerk (NW).

6. Verfahren zur Verarbeitung eines Signals (S), das in einem Netzwerk aus verbundenen Objekten übertragen wird und gemäß einem Verfahren zur Erzeugung nach einem der Ansprüche 1 bis 5 erzeugt wird, wobei das Verfahren zur Verarbeitung umfasst:
- einen Schritt des Empfangens des Signals (S);
- einen Schritt (H20) des Extrahierens, aus dem empfangenen Signal, von Daten, die von einem ersten Signal (S1) transportiert werden, und einer Information (I) zur Datierung, die in einem zweiten Signal (S2) zur Synchronisation enthalten ist, wobei das erste Signal (S1) und das zweite Signal (S2) unter Verwendung eines Vorgangs erhalten werden, der zu dem bei dem Verfahren zur Erzeugung verwendeten reversiblen Vorgang invers ist.

7. Verfahren zur Verarbeitung nach Anspruch 6, umfassend einen Schritt des Erhaltens einer Datierung der Daten, die von dem ersten Signal (S1) transportiert werden, und/oder einer Position eines verbundenen Objekts (OC), das diese Daten erfasst hat, unter Verwendung der Information (I) zur Datierung, die in dem zweiten Signal (S2) zur Synchronisation enthalten ist.

8. Vorrichtung (DG) zur Erzeugung eines Signals (S), das dazu bestimmt ist, in einem Netzwerk aus verbundenen Objekten übertragen zu werden, wobei die Vorrichtung (DG) umfasst:
- ein Modul (MO) zum Erhalten eines ersten Signals (S1), das einen Strom von Daten transportiert, die von einem verbundenen Objekt (OC) des Netzwerks erfasst werden, wobei die Vorrichtung dergestalt ist, dass sie umfasst:
- ein Modul (MR) zum Empfangen eines zweiten Signals (S2) zur Synchronisation, das eine Information (I) beinhaltet, die eine Datierung des ersten Signals (S1) angibt;
- ein Modul (MG) zum Erzeugen eines Signals, das dazu ausgestaltet ist, ein drittes Signal (S) zu erzeugen, indem das erste Signal (S1) und das zweite Signal (s2) zur Synchronisation gemäß einem reversiblen Vorgang kombiniert werden, wobei die Vorrichtung **dadurch gekennzeichnet ist, dass** der reversible Vorgang beinhaltet:
- ein Frequenzmultiplexen der ersten und zweiten Signale (S1, S2) über zwei aufeinander folgende Frequenzbänder; oder
- ein Multiplexen der ersten und zweiten Signale (S1, S2) durch orthogonale Codes; oder
- ein steganographisches Multiplexen der ersten und zweiten Signale (S1, S2); oder
- ein Watermarking, wobei das dritte Signal erhalten wird, indem die ersten und zweiten Signale überlagert werden, wobei das zweite Signal ein Signal mit hoher spektraler Dichte ist, wobei das erste Signal ein schmalbandiges Signal mit geringer Dichte ist.

9. Vorrichtung (DD) zur Verarbeitung eines Signals (S), das in einem Netzwerk aus verbundenen Objekten übertragen wird, wobei die Vorrichtung (DD) beinhaltet:
- ein Modul (MR) zum Empfangen, über ein Kommunikationsnetzwerk (NW), eines Signals (S), das mit einem Verfahren zur Erzeugung (DG) eines Signals nach einem der Ansprüche 1 bis 5 erzeugt wird;
- ein Modul (ME) zum Extrahieren, das dazu ausgestaltet ist, aus dem empfangenen Signal (S) Daten, die von einem ersten Signal (S1) transportiert werden, und eine Information (I) zur Datierung, die in einem zweiten Signal (S2) zur Synchronisation enthalten ist, zu extrahieren, wobei das erste Signal (S1) und das zweite Signal (S2) unter Verwendung eines Vorgangs erhalten werden, der zu dem bei dem Verfahren zur Erzeugung verwendeten reversiblen Vorgang invers ist, wobei die Vorrichtung **dadurch gekennzeichnet ist, dass** der bei dem Verfahren zur Erzeugung verwendete reversible Vorgang beinhaltet:
- ein Frequenzmultiplexen der ersten und zweiten Signale (S1, S2) über zwei aufeinander folgende Frequenzbänder; oder
- ein Multiplexen der ersten und zweiten Signale (S1, S2) durch orthogonale Codes; oder
- ein steganographisches Multiplexen der ersten und zweiten Signale (S1, S2); oder
- ein Watermarking, wobei das dritte Signal erhalten wird, indem die ersten und zweiten Signale überlagert werden, wobei das zweite Signal ein Signal mit hoher spektraler Dichte ist, wobei das erste Signal ein schmalbandiges Signal mit geringer Dichte ist.

10. Kommunikationssystem (SC), umfassend:
- mindestens ein verbundenes Objekt (OC) und mindestens eine Empfangsstation (ER) zur Digitalisierung eines Netzwerks aus verbundenen Objekten; und
- ein Informationssystem (SI), das eine Vorrichtung (DD) zur Verarbeitung nach Anspruch 9 beinhaltet;
mindestens eine Ausrüstung des Netzwerks aus verbundenen Objekten unter dem mindestens einen verbundenen Objekt (OC) und der mindestens einen Empfangsstation (ER), die eine Vorrichtung (DG) zur Erzeugung nach Anspruch 8 beinhaltet.

11. Computerprogramm, das Anweisungen umfasst, die bei der Ausführung des Programms durch einen Computer die Schritte eines Verfahrens zur Erzeugung nach einem der Ansprüche 1 bis 5 oder eines Verfahrens zur Signalverarbeitung nach Anspruch 6 oder 7 ausführen.

12. Computerlesbares Speichermedium, auf dem ein Computerprogramm nach Anspruch 11 gespeichert ist.

## Claims

1. Method for generating a signal (S) intended to be transmitted through a network of connected objects, said method comprising:
- a step (G10) of obtaining a first signal (S1) conveying a stream of data which are acquired by a connected object (OC) of the network, said method being such that it comprises:
- a step (G20) of receiving a second synchronization signal (S2) comprising information (I) providing a dating of the first signal (S1); and
- a step (G30) of generating a third signal (S) by combining, in a reversible operation, the first signal (S1) and the second synchronization signal (S2), said method being **characterized in that** said reversible operation comprises:
- frequency multiplexing the first signal and second signal (S1, S2) over two consecutive frequency bands; or
- multiplexing the first signal and second signal (S1, S2) by orthogonal codes; or
- steganographically multiplexing the first signal and second signal (S1, S2); or
- watermarking, the third signal being obtained by superposing the first signal and second signal, the second signal being a high-spectral-density signal, the first signal being a low-density narrowband signal.

2. Method according to Claim 1, wherein said second synchronization signal (S2) is received from a satellite navigation system (SS).

3. Method according to Claim 1 or 2, wherein the steps of obtaining (G10), receiving (G20) and generating (G30) are implemented by said connected object (OC) and said third signal (S) is an analogue signal, said method further comprising a step of the connected object (OC) transmitting the third signal (S) to a digitizing receiving station (ER) of the network of connected objects.

4. Method according to Claim 1 or 2, wherein the steps of obtaining (G10), receiving (G20) and generating (G30) are implemented by a digitizing receiving station (ER) of the network of connected objects, said method further comprising:
- a step (G40) of digitizing the third signal (S);
- a step (G50) of dividing the digitized third signal into packets; and
- a step (G60) of transmitting the packets to an information system (SI) via a communications network (NW).

5. Method according to Claim 1 or 2, wherein the steps of obtaining (G10), receiving (G20) and generating (G30) are implemented by a digitizing receiving station (ER) of the network of connected objects, said method further comprising:
- a step of digitizing the first signal (S1) and the second synchronization signal (S2) before the step of generating the third signal;
- a step of dividing the third signal (S) into packets; and
- a step (G60) of transmitting the packets to an information system (SI) via a communications network (NW).

6. Method for processing a signal (S) transmitted through a network of connected objects and generated according to a generation method according to any one of Claims 1 to 5, the processing method comprising:
- a step of receiving said signal (S);
- a step (H20) of extracting, from the received signal, data conveyed by a first signal (S1) and dating information (I) contained in a second synchronization signal (S2), the first signal (S1) and the second signal (S2) being obtained using an operation which is the reverse of the reversible operation used during the generation method.

7. Processing method according to Claim 6, comprising a step of obtaining a dating of the data conveyed by the first signal (S1) and/or a location of a connected object (OC) having acquired these data, using the dating information (I) contained in the second synchronization signal (S2).

8. Device (DG) for generating a signal (S) intended to be transmitted through a network of connected objects, said device (DG) comprising:
- a module (MO) for obtaining a first signal (S1) conveying a stream of data which are acquired by a connected object (OC) of the network, said device being such that it comprises:
- a module (MR) for receiving a second synchronization signal (S2) comprising information (I) providing a dating of the first signal (S1);
- a signal generation module (MG) configured to generate a third signal (S) by combining, in a reversible operation, the first signal (S1) and the second synchronization signal (s2), said device being **characterized in that** said reversible operation comprises:
- frequency multiplexing the first signal and second signal (S1, S2) over two consecutive frequency bands; or
- multiplexing the first signal and second signal (S1, S2) by orthogonal codes; or
- steganographically multiplexing the first signal and second signal (S1, S2); or
- watermarking, the third signal being obtained by superposing the first signal and second signal, the second signal being a high-spectral-density signal, the first signal being a low-density narrowband signal.

9. Device (DD) for processing a signal (S) transmitted through a network of connected objects, said device (DD) comprising:
- a module (MR) for receiving, via a communications network (NW), a signal (S) generated by a signal generation method (DG) according to any one of Claims 1 to 5;
- an extraction module (ME) configured to extract, from the received signal (S), data conveyed by a first signal (S1) and dating information (I) contained in a second synchronization signal (S2), the first signal (S1) and the second signal (S2) being obtained using an operation which is the reverse of the reversible operation used during the generation method, the device being **characterized in that** the reversible operation used during the generation method comprises:
- frequency multiplexing the first signal and second signal (S1, S2) over two consecutive frequency bands; or
- multiplexing the first signal and second signal (S1, S2) by orthogonal codes; or
- steganographically multiplexing the first signal and second signal (S1, S2); or
- watermarking, the third signal being obtained by superposing the first signal and second signal, the second signal being a high-spectral-density signal, the first signal being a low-density narrowband signal.

10. Communication system (SC), comprising:
- at least one connected object (OC) and at least one digitizing receiving station (ER) of a network of connected objects; and
- an information system (SI) comprising a processing device (DD) according to Claim 9;
at least one equipment of the network of connected objects from among said at least one connected object (OC) and said at least one receiving station (ER) comprising a generation device (DG) according to Claim 8.

11. Computer program comprising instructions for executing the steps of a signal generation method according to any one of Claims 1 to 5, or of a signal processing method according to Claim 6 or 7, when said program is executed by a processor.

12. Computer-readable storage medium on which a computer program according to Claim 11 is stored.
